(19) Europäisches Patentamt
European Patent Office
Office européen des brevets

(11) **EP 4 270 764 A1**

(12) **EUROPÄISCHE PATENTANMELDUNG**

(43) Veröffentlichungstag:
**01.11.2023  Patentblatt 2023/44**

(21) Anmeldenummer: **22020627.0**

(22) Anmeldetag: **22.12.2022**

(51) Internationale Patentklassifikation (IPC):
***H02M 7/483*** (2007.01)      ***H02M 1/00*** (2006.01)

(52) Gemeinsame Patentklassifikation (CPC):
**H02M 1/0095; H02M 7/483;** H02M 1/0074;
H02M 1/0077; H02M 7/4835; H02M 7/4837

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **25.04.2022  DE 102022109825**

(71) Anmelder: **Dr. Ing. h.c. F. Porsche
Aktiengesellschaft
70435 Stuttgart (DE)**

(72) Erfinder:
• **Götz, Stefan
85659 Forstern (DE)**
• **Nima, Tashakor
67655 Kaiserslautern (DE)**
• **Iraji, Farzad
67663 Kaiserslautern (DE)**

(54) **MULTILEVELKONVERTER-SCHALTUNGS MIT GESCHALTETEN KONDENSATOREN IN SSPS TOPOLOGIE**

(57) Die vorliegende Erfindung betrifft ein Verfahren zur Anordnung einer generalisierten Multilevelkonverter-Schaltungstopologie mit geschalteten Kondensatoren (111, 112, 113) zur Umsetzung von Gleichstrom in Wechselstrom, wobei die Anordnung hinsichtlich vorgegebener Ausgangsspannungsstufen konfiguriert werden kann. Bei gleicher Zahl an Halbleiterschaltern (101, 102, 103, 104, 105, 106, 107, 108, 109, 110) lassen sich im Vergleich zu bisherigen Verfahren eine höhere Zahl an Spannungsstufen erzielen. Abhängig von der vorgegebenen Problemstellung kann eine maximale Ausgangsspannung des Wechselstroms von wesentlich niedrigeren Werten als die Eingangsspannung des Gleichstroms bis hin zu einem Vielfachen dieser Werte variieren. Die generalisierte Schaltungstopologie (100) kann durch wiederholbare Anordnung einer aneinander anreihbaren Spannungsstufeneinheit (120) an eine gewünschte Anzahl an Spannungsstufen und durch entsprechende Wahl einer Anzahl an Submodulen an eine Multiphasenlast angepasst werden. Ferner wird ein mit der Schaltungstopologie (100) ausgestalteter modularer Multilevelkonverter beansprucht. Ein solcher mit der erfindungsgemäßen Schaltungstopologie (100) ausgestalteter Multilevelkonverter besitzt vorteilhaft eine inhärente Fähigkeit zum Ausgleich von Kondensatorspannungen in seinen Submodulen.

Fig. 1

EP 4 270 764 A1

**Beschreibung**

Die vorliegende Erfindung betrifft einen modularen Multilevelkonverter, bei dem ein jeweiliges Submodul mindestens einen über Halbleiterschalter verbundenen Kondensator umfasst. Es wird eine generalisierte Schaltung eingeführt, welche auf eine vorgegebene Zahl an Spannungsstufen erweiterbar ist.

Leistungswandler haben sich im täglichen Leben in einer Reihe von Anwendungen als sehr nützlich erwiesen. So wandeln sie einen durch Photovoltaik erzeugten Gleichstrom in Wechselstrom um, genauso wie sie eine Gleichspannung von Batterien für eine unabhängige (Wechsel-)Stromversorgung bspw. von Computeranlagen konvertieren. Umgekehrt können sie als Gleichrichter ausgestaltet die Batterien aus dem Niederspannungsnetz aufladen. Von besonderem Interesse sind sie auch bei aus mitgeführten Batteriepacks versorgten Traktionsmaschinen von elektrischen oder teilelektrischen Fahrzeugen, Schiffen oder Lokomotiven.

Eine traditionell dreiphasige Versorgung solcher Traktionsmaschinen mit Drehstrom stellt jedoch nicht notwendigerweise eine bestmögliche Systemlösung dar. So bieten Multiphasenmaschinen, d. h. elektrische Maschinen mit mehr als drei Phasen, potentiell Vorteile, wie bspw. eine über die erweiterte Phasenanzahl bessere Leistungsaufteilung, eine niedrigere Drehmomentwelligkeit, oder eine bessere Fehlertoleranz. Unabhängig von der erweiterten Phasenanzahl kommt jedoch dem Gleichstrom/Wechselstrom-Wandler eine entscheidende Bedeutung durch seine vielfältigen Möglichkeiten zu einer geeigneten Parametersteuerung elektrischer Maschinen zu.

Herkömmliche H-Brücken-Inverter, kaskadierte H-Brücken-Inverter, Z-source-Inverter, Multilevelkonverter und modulare Multilevelkonverter stellen alles Beispiele solcher Wandler dar. In den letzten Jahren stachen dabei insbesondere Multilevelkonverter auf Grund ihrer Vorteile (bspw. kleinere Harmonische im Output oder Eignung auch für höhere Spannungen) gegenüber einer althergebrachten dreistufigen Pulsdauermodulation hervor. Jedoch nehmen Komplexität und Kosten zur Umsetzung höherer Spannungsstufen bei Verwendung herkömmlicher Schaltungstopologien über die Maßen zu, was einem exponentiellen Anstieg in der Zahl notwendiger Bauelemente wie Halbleiterschalter, Gate-Treiber und Kondensatoren geschuldet ist, bspw. beschrieben in M. Vijeh, M. Rezanejad, E. Samadaei and K. Bertilsson, "A General Review of Multilevel Inverters Based on Main Submodules: Structural Point of View," in IEEE Transactions on Power Electronics, vol. 34, no. 10, pp. 9479-9502, Oct. 2019, doi: 10.1109/TPEL.2018.2890649.

Zudem sind bei Multilevelkonvertern Risiken zu beachten, welche durch unausgeglichene Kondensatorspannungen entstehen. Kondensatorspannungen von Submodulen des Multilevelkonverters auf ihren Nominalwert auszugleichen, stellt daher eine große Hürde bei einer Erweiterung der Phasenanzahl dar. Einen möglichen Ausweg bieten Schaltungen mit sich selbst ausgleichenden Kondensatorspannungen, realisiert bspw. in C. Gao and J. Lv, "A New Parallel-Connected Diode-Clamped Modular Multilevel Converter With Voltage Self-Balancing," in IEEE Transactions on Power Delivery, vol. 32, no. 3, pp. 1616-1625, June 2017, doi: 10.1109/TPWRD.2017.2670662. Hierin wird eine parallel-verbundene-Dreipunkt-Wechselrichter-Topologie beschrieben, wobei jeder Strang zwei parallel-verbundene Gruppen von Submodulen aufweist. Bei einer solchen Schaltungstopologie gleichen sich die Kondensatorspannungen der Submodule zwar automatisch aus, so dass überwachende Regler obsolet sind, jedoch kommt es hierbei zu einem beträchtlichen Zuwachs an Bauelementen.

Alternativ wird in N. Tashakor, M. Kilictas, E. Bagheri and S. Goetz, "Modular Multilevel Converter With Sensorless Diode-Clamped Balancing Through Level-Adjusted Phase-Shifted Modulation," in IEEE Transactions on Power Electronics, vol. 36, no. 7, pp. 7725-7735, July 2021, doi: 10.1109/TPEL.2020.3041599 eine Dreipunkt-Wechselrichter-Topologie mit einem einzelnen Submodul-Strang vorgeschlagen, welche wohl als einfachste Dreipunkt-Wechselrichter-Topologie mit sich selbst ausgleichenden Kondensatorspannungen betrachtet werden kann. Allerdings könnte eine solche Topologie mit Effizienzeinbußen in besonders unausgeglichenen Systemen behaftet sein.

Schaltungen mit geschalteten Kondensatoren bei Leistungselektroniken stellen ein weiteres sich in den letzten Jahren stark entwickelndes Gebiet dar. Wandler mit solchen geschalteten Kondensatoren variieren Spannungen, indem sie eine serielle/parallele Verschaltung der Kondensatoren rekonfigurieren, und ähneln damit kaskadierte-Brücken-Wechselrichtern oder modularen Multilevelkonvertern. Mittels Schaltungstopologien, welche aus Bestandteilen solcher geschalteten Kondensatoren und Multilevelkonvertern zusammengesetzt sind, lassen sich ohne Modifikation sowohl Gleichstrom wie Wechselstrom erzeugen, teilweise sogar mit Stromwegen über dieselben Transistoren. Jedoch wird bislang eine solche Instrumentalisierung geschalteter Kondensatoren auf einer modularen Multilevelfunktionalität zwischen den einzelnen Submodulen aufgesetzt, und findet nicht innerhalb der einzelnen Submodule statt, weshalb ebenfalls eine große Zahl Bauelementen wie Transistoren und/oder Kondensatoren, manchmal sogar Dioden, benötigt werden.

Voranstehend erwähnte neueste Entwicklungen bei Multilevelkonvertern haben zwar deren faszinierende Möglichkeiten aufgezeigt, wie beispielsweise eine Bereitstellung einer großen Zahl an Ausgangsspannungen oder eine integrierte Spannungsverstärkung. Dennoch weisen die meisten vorhandenen Schaltungstopologien nur eine begrenzte Zahl an Ausgangsspannungsstufen mit begrenztem Verstärkungsverhältnis auf. Außerdem ist bei Multilevelkonvertern ein Ausgleich von Kondensatorspannungen von entscheidender Bedeutung und sollte in Schaltungstopologie oder Steuerung berücksichtigt sein.

Vor diesem Hintergrund ist es eine Aufgabe der vorliegenden Erfindung, ein Verfahren zur Anordnung einer Schaltungstopologie für einen mehrphasigen Multilevelkonverter zur Verfügung zu stellen, welches auf einfache Weise an eine vorgegebene Zahl von Phasenströmen angepasst werden kann und welches in der Lage ist, einen Wechselstrom mit einer maximalen Ausgangsspannung weit höher als eine durch eine Gleichstromquelle bereitgestellte Eingangsspannung zu erzeugen. Dies soll mittels Niedervoltkondensatoren erreicht werden. Weiterhin sollen Kondensatorspannungen in Submodulen sich automatisch ausgleichen können. Ferner soll ein mit der Schaltungstopologie ausgestalteter modularer Multilevelkonverter bereitgestellt werden.

Zur Lösung der voranstehend genannten Aufgabe wird ein Verfahren zur Anordnung einer Schaltung gemäß einer Schaltungstopologie für einen modularen Multilevelkonverter vorgeschlagen, wobei der modulare Multilevelkonverter eine Steuerung und mindestens ein Submodul aufweist und wobei in dem mindestens einen Submodul eine Mehrzahl an Halbleiterschaltern und eine Mehrzahl an Zwischenkreiskondensatoren gemäß der Schaltungstopologie angeordnet werden. Die Schaltungstopologie sieht zwischen einem unteren Eingangsanschluss und einem oberen Eingangsanschluss einen ersten Zwischenkreiskondensator und parallel dazu eine erste Halbbrücke vor. Weiter sieht sie parallel dazu eine zweite und eine dritte Halbbrücke, die mit dem unteren Eingangsanschluss verbunden sind und die über einen siebten Halbleiterschalter mit dem oberen Eingangsanschluss verbunden sind, vor. Zudem sieht sie einen zweiten Zwischenkreiskondensator, der zwischen einem Mittenabgriff der ersten Halbbrücke und der Verbindung der zweiten und dritten Halbbrücke mit dem siebten Halbleiterschalter angeordnet ist, vor. Die Schaltungstopologie ist entsprechend einer vorgegebenen Zahl an Spannungsstufen durch eine wahlweise wiederholbare Spannungsstufeneinheit um jeweilig zwei Spannungsstufen erweiterbar. Durch die Steuerung wird bei der zweiten und der dritten Halbbrücke ein jeweils oberer Halbleiterschalter komplementär zu einem jeweils unteren Halbleiterschalter geschaltet. Der untere Eingangsanschluss wird entweder mit einem oberen Eingangsanschluss eines ersten benachbarten Submoduls oder mit einem negativen Pol einer Gleichstromquelle verbunden. Der obere Eingangsanschluss wird entweder mit einem unteren Eingangsanschluss eines zweiten benachbarten Submoduls oder mit einem positiven Pol der Gleichstromquelle verbunden. Durch jeweiligen Mittenabgriff an den zwei Halbbrücken wird ein jeweiliger Ausgangsanschluss bereitgestellt.

Die jeweilig wiederholbare Spannungsstufeneinheit weist einen jeweiligen Zwischenkreiskondensator, eine jeweilige Halbbrücke und einen jeweiligen Halbleiterschalter auf. Der jeweilige Zwischenkreiskondensator ist mit einem Ende mit einem Mittenabgriff der jeweiligen Halbbrücke verbunden und mit einem anderen Ende mit dem jeweiligen Halbleiterschalter verbunden, wobei der jeweilige Halbleiterschalter wiederum mit einem oberen Ende der jeweiligen Halbbrücke verbunden ist. Die jeweilig wiederholbare Spannungsstufeneinheit ist über drei Anschlüsse in der Schaltungstopologie fortgesetzt integrierbar: Ein erster Anschluss wird durch das untere Ende der jeweiligen Halbbrücke gebildet, welcher jeweilig mit dem Mittenabgriff der ersten Halbbrücke verbunden wird. Ein zweiter Anschluss wird durch das obere Ende der jeweiligen Halbbrücke und ein dritter Anschluss wird an der Verbindung zwischen jeweiliger Halbbrücke und jeweiligem Zwischenkreiskondensator angeordnet, wobei zweiter Anschluss und dritter Anschluss zwischen der Verbindung des siebten Halbleiterschalters mit den zwei weiteren Halbbrücken eingefügt werden.

Die erfindungsgemäße Schaltungstopologie stellt damit in ihrer Grundform (ohne die wahlweise wiederholbare Spannungsstufeneinheit) fünf Spannungsstufen bereit. Durch die jeweilig wiederholbare Spannungsstufeneinheit wird dies jeweilig um zwei Spannungsstufen erweitert.

Bei einer Wahl eines jeweiligen Halbleiterschalter-Typs ist zu beachten, dass der untere oder obere Halbleiterschalter der ersten Halbbrücke jeweilig eine interne antiparallele Diode aufweisen darf, diese aber nicht unbedingt notwendig ist und auch weggelassen werden kann. Hingegen müssen entweder die unteren oder oberen Halbleiterschalter der zweiten und dritten Halbbrücken jeweilig eine interne antiparallele Diode aufweisen, während sie bei den jeweils anderen oberen oder unteren Halbleiterschaltern der zweiten und dritten Halbbrücken eben nicht notwendig zur bestimmungsgemäßen Leistungsversorgung der Last sind. Abgesehen davon, sind bei allen weiteren Halbleiterschaltern außerhalb von Halbbrücken keine solchen internen antiparallelen Dioden erlaubt.

In einer Ausführungsform des erfindungsgemäßen Verfahrens wird das mindestens eine Submodul an seinen jeweiligen Ausgangsanschlüssen mit einer Phase einer Last verbunden. Durch Steuerung der Halbleiterschalter mittels einer Pulsdauermodulation wird ein Wechselstrom erzeugt.

In einer weiteren Ausführungsform des erfindungsgemäßen Verfahrens wird eine Anzahl an Submodulen gemäß einer vorgegebenen Zahl an Phasen der Last gewählt und die Submodule werden seriell miteinander verschaltet. Damit erlaubt die erfindungsgemäße Schaltungstopologie vorteilhaft eine Ausgestaltung mit Niedervolt-Zwischenkreiskondensatoren, selbst wenn die Gleichstromquelle eine Klemmenspannung $V_{DC}$ im Hochvolt-Bereich aufweist. Ein an den Ausgangsanschlüssen bereitgestellte Ausgangsspannung kann einen Bruchteil bis zu einem Vielfachen dieser Klemmenspannung betragen. Über $N$ miteinander seriell über ihre unteren und oberen Eingangsanschlüsse verbundenen Submodule wird somit ein Multiport-Multiphasen-Inverter mit $N$ (Ausgabe-)Phasen bereitgestellt.

Eine Last mit mehreren Phasen wird auch als Multiphasenlast bezeichnet. Durch die erfindungsgemäße Anordnung mehrerer Submodule gleichen sich alle Zwischenkreiskondensatoren der Submodule auf einem Spannungsniveau der Gleichstromquelle selbst aus. Dadurch wird vorteilhaft eine ansonsten notwendige (und aus dem Stand der Technik bekannte) Anordnung von Spannungssensoren oder aufwendiger Steuerungstechnik vermieden.

Die erfindungsgemäße Schaltungstopologie umfasst pro Submodul bei einer Anzahl $N_L$ von Spannungsstufen als Bauelemente eine Anzahl Ns von Halbleiterschaltern,

$$N_S = \frac{3N_L - 1}{2} \qquad , \qquad (1)$$

und eine Anzahl $Nc$ von Zwischenkreiskondensatoren $Ns$ von Halbleiterschaltern,

$$N_C = \frac{N_L - 1}{2} \qquad , \qquad (2)$$

wobei sich gemäß voranstehender die internen antiparallelen Dioden betreffender Beschreibung eine Anzahl $N_{NA}$ von Halbleiterschaltern, welche keine solche Diode aufweisen dürfen,

$$N_{NA} = \frac{N_L - 3}{2} \qquad , \qquad (3)$$

eine Anzahl $N_{WA}$ von Halbleiterschaltern, welche eine solche Diode aufweisen müssen,

$$N_{WA} = 2 \quad , \qquad (4)$$

und eine Anzahl $Now$ von Halbleiterschaltern, welche eine solche Diode aufweisen können, aber nicht notwendigerweise müssen,

$$N_{OW} = N_L - 1 \quad , \qquad (5)$$

ergeben.

Der durch die serielle Verbindung bereitgestellte Multiport-Multiphasen-Inverter weist somit $N$ mal $Nc$ Zwischenkreiskondensatoren und $N$ mal $Ns$ Halbleiterschalter auf. Die mögliche Anzahl $N_L$ an Spannungsstufen pro Submodul kann entsprechend den Anforderungen der Multiphasenlast gewählt werden, wobei eine jeweilige vom jeweiligen Submodul bereitgestellte Phasenspannung innerhalb dieser $N_L$ Spannungsstufen variierbar ist. Prinzipiell ist auch eine unterschiedliche Zahl an Spannungsstufeneinheiten in den jeweiligen Submodulen anordenbar.

Bei identischen $N$ Submodulen gilt für Kapazitäten $C_{i1}$ der in Reihe geschalteten ersten Zwischenkreiskondensatoren, dass

$$C_{11} = C_{21} = \ldots = C_{N1} \qquad , \qquad (6)$$

weshalb sich auch deren jeweilige Kondensatorspannungen $V_{C_{i1}}$ entsprechen:

$$V_{C_{11}} = V_{C_{21}} = \ldots = V_{C_{N1}} \qquad , \qquad (7)$$

Da die Gleichstromquelle mit Klemmenspannung $V_{DC}$ und die Reihe der ersten Zwischenkreiskondensatoren einen Stromkreis bilden, gilt:

$$V_{DC} = \sum_{i=1}^{N} V_{C_{i1}} \quad , \qquad (8)$$

bzw.

$$V_{C_{11}} = V_{C_{21}} = \ldots = V_{C_{N1}} = \frac{V_{DC}}{N} \qquad . \qquad (9)$$

Aus Gl. (9) folgt, dass die erfindungsgemäße Schaltungstopologie für die ersten Zwischenkreiskondensatoren eine intrinsische Spannungsreduktion gegenüber der Gleichstromquelle besitzt.

Im Vergleich mit den Kondensatorspannungen $V_{C_{i1}}$ ist die Phasenspannung $V_i$ durch die erfindungsgemäß wiederholbare Anordnung der Spannungsstufeneinheit vom $i$-ten Submodul auf einem gewünschten Wert einstellbar. Dieser ist bei $N_L$ Spannungsstufen gegeben durch

$$V_i = \left\{ \pm \frac{kV_{DC}}{N} \,|\, k \in \mathbb{N}, 0 < 2k + 1 \leq N_L \right\} \qquad . \qquad (10)$$

Damit kann die bereitstellbare Phasenspannung $V_i$ über die Klemmenspannung $V_{DC}$ der Gleichstromquelle gehoben werden, falls

$$N_L > 2N + 1 \qquad . \qquad (11)$$

Unabhängig von der Zahl der Spannungsstufen $N_L$, sollten die jeweiligen Bauelemente geeignet gewählt sein, um einer nominelle Kondensatorspannung oder eine Drain-Source-Spannung aller Halbleiterschalter - außer derjenigen der zweiten und dritten Halbbrücken - von $V_{DC}$/N zu genügen. Hingegen sollten die Halbleiterschalter der zweiten und dritten Halbbrücken geeignet sein, bei einer Drain-Source-Spannung von maximal ($N_L$ - 1)$V_{DC}$/2W bestehen zu können.

In einer noch weiteren Ausführungsform des erfindungsgemäßen Verfahrens wird eine Anzahl an Submodulen gemäß einer vorgegebenen Zahl an Phasen der Last gewählt und die Submodule werden parallel mit der Gleichstromquelle verschaltet.

In einer anderen Ausführungsform des erfindungsgemäßen Verfahrens werden zur Erzeugung einer Gleichspannung durch die Steuerung in mindestens einem Submoduls wahlweise entweder in der zweiten Halbbrücke der obere Halbleiterschalter offen und in der dritten Halbbrücke der obere Halbleiterschalter geschlossen geschaltet oder in der zweiten Halbbrücke der untere Halbleiterschalter offen und in der dritten Halbbrücke der untere Halbleiterschalter geschlossen geschaltet. Je nach Lastanforderung schaltet die Steuerung in dem mindestens einen Submodul mindestens einen Zwischenkreiskondensator in den mit den Ausgangsanschlüssen verbundenen (Gleichspannungs-)Schaltkreis. Auch eine Umgehung aller Zwischenkreiskondensatoren des mindestens einen Submoduls ist denkbar.

In einer noch anderen Ausführungsform des erfindungsgemäßen Verfahrens werden ein erster Ausgangsanschluss der zweiten Halbbrücke und eine Verbindung zum unteren Eingangsanschluss mit entsprechenden Anschlüssen des ersten benachbarten Submoduls verbunden. Ein zweiter Ausgangsanschluss der dritten Halbbrücke und eine Verbindung zum oberen Eingangsanschluss werden mit entsprechenden Anschlüssen des zweiten benachbarten Submoduls verbunden. Durch Instrumentalisierung eines bei modularen Multilevelkonvertern mit serieller und paralleler Konnektivität bekannten parallelen Schaltzustandes wird ein Beitrag zu einer Gesamtgleichspannungsausgabe erzeugt. Ein solcher modularer Multilevelkonverter mit serieller und paralleler Konnektivität, mit MMSPC abgekürzt, ist bspw. in "Goetz, S.M.; Peterchev, A.V.; Weyh, T., "Modular Multilevel Converter With Series and Parallel Module Connectivity: Topology and Control," Power Electronics, IEEE Transactions on , vol.30, no.1, pp.203,215, 2015. doi: 10.1109/TPEL.2014.231022 beschrieben. Durch die erfindungsgemäße Ausführungsform ist es mit dem parallelen Schaltungszustand möglich, bei einem Strang über die jeweiligen Eingangsanschlüsse miteinander verbundener Submodule jeweilige Zwischenkreiskondensatoren in jeweilig benachbarten Submodulen parallel zu schalten - und zwar prinzipiell bis hin zu allen Zwischenkreiskondensatoren aller Submodule.

In einer fortgesetzt anderen Ausführungsform des erfindungsgemäßen Verfahrens werden parallel zu den zweiten und dritten Halbbrücken eine vierte und eine fünfte Halbbrücke angeordnet. Ein jeweiliger Mittenabgriff an der vierten und fünften Halbbrücke wird mit entsprechenden Anschlüssen des ersten benachbarten Submoduls verbunden. Die jeweiligen Ausgangsanschlüsse der zweiten und dritten Halbbrücke werden mit entsprechenden Anschlüssen des zweiten benachbarten Submoduls verbunden. Durch die Steuerung wird an den jeweiligen Ausgangsanschlüssen ein Wechselstrom erzeugt, wobei auf Grund der zusätzlichen vierten und fünften Halbbrücken die jeweiligen Zwischenkreiskondensatoren benachbarter Submodule parallel verschaltbar sind.

Ferner wird ein modularer Multilevelkonverter beansprucht, wobei der modulare Multilevelkonverter eine Steuerung und mindestens ein Submodul aufweist. In dem mindestens einen Submodul sind eine Mehrzahl an Halbleiterschaltern und eine Mehrzahl an Zwischenkreiskondensatoren gemäß einer Schaltungstopologie angeordnet. Die Schaltungstopologie sieht zwischen einem unteren Eingangsanschluss und einem oberen Eingangsanschluss einen ersten Zwischenkreiskondensator und parallel dazu eine erste Halbbrücke vor. Weiter sieht sie parallel dazu eine zweite und eine dritte Halbbrücke, die mit dem unteren Eingangsanschluss verbunden sind und die über einen siebten Halbleiterschalter mit dem oberen Eingangsanschluss verbunden sind, vor. Zudem sieht sie einen zweiten Zwischenkreiskondensator, der zwischen einem Mittenabgriff der ersten Halbbrücke und der Verbindung der zweiten und dritten Halbbrücke mit dem siebten Halbleiterschalter angeordnet ist, vor. Die Schaltungstopologie ist entsprechend einer vorgegebenen Zahl an Spannungsstufen durch eine wahlweise wiederholbare Spannungsstufeneinheit um jeweilig zwei Spannungsstufen erweiterbar. Die Steuerung ist dazu konfiguriert, bei der zweiten und der dritten Halbbrücke einen jeweils oberen Halbleiterschalter komplementär zu einem jeweils unteren Halbleiterschalter zu schalten. Der untere Eingangsanschluss ist entweder mit einem oberen Eingangsanschluss eines ersten benachbarten Submoduls oder mit einem negativen Pol einer Gleichstromquelle verbunden. Der obere Eingangsanschluss ist entweder mit einem unteren Eingangsanschluss eines zweiten benachbarten Submoduls oder mit einem positiven Pol der Gleichstromquelle verbunden. Durch jeweiligen Mittenabgriff ist an den zwei Halbbrücken ein jeweiliger Ausgangsanschluss bereitgestellt.

In einer Ausgestaltung des erfindungsgemäßen modularen Multilevelkonverters ist das mindestens eine Submodul an seinen jeweiligen Ausgangsanschlüssen mit einer Phase einer Last verbunden, wobei die Steuerung dazu konfiguriert ist, mittels einer Pulsdauermodulation einen Wechselstrom zu erzeugen.

In einer weiteren Ausgestaltung des erfindungsgemäßen modularen Multilevelkonverters ist eine Anzahl an Submodulen gemäß einer vorgegebenen Zahl an Phasen der Last gewählt. Die Submodule sind seriell miteinander verschaltet.

In einer noch weiteren Ausgestaltung des erfindungsgemäßen modularen Multilevelkonverters ist eine Anzahl an Submodulen gemäß einer vorgegebenen Zahl an Phasen der Last gewählt. Die Submodule sind parallel mit der Gleichstromquelle verschaltet.

In einer anderen Ausgestaltung des erfindungsgemäßen modularen Multilevelkonverters sind zur Erzeugung einer Gleichspannung durch die Steuerung des mindestens einen Submoduls wahlweise entweder in der zweiten Halbbrücke der obere Halbleiterschalter offen und in der dritten Halbbrücke der obere Halbleiterschalter geschlossen geschaltet oder in der zweiten Halbbrücke der untere Halbleiterschalter offen und in der dritten Halbbrücke der untere Halbleiterschalter geschlossen geschaltet.

In einer noch anderen Ausgestaltung des erfindungsgemäßen modularen Multilevelkonverters sind ein erster Ausgangsanschluss der zweiten Halbbrücke und eine Verbindung zum unteren Eingangsanschluss mit entsprechenden Anschlüssen des ersten benachbarten Submoduls verbunden. Ein zweiter Ausgangsanschluss der dritten Halbbrücke und eine Verbindung zum oberen Eingangsanschluss sind mit entsprechenden Anschlüssen des zweiten benachbarten Submoduls verbunden. Die Steuerung ist dazu konfiguriert, durch Instrumentalisierung eines parallelen Schaltzustandes bei modularen Multilevelkonvertern mit serieller und paralleler Konnektivität einen Beitrag des jeweiligen Submoduls zu einer Gesamtgleichspannungsausgabe zu erzeugen.

In einer fortgesetzt anderen Ausgestaltung des erfindungsgemäßen modularen Multilevelkonverters sind parallel zu den zweiten und dritten Halbbrücken eine vierte und eine fünfte Halbbrücke angeordnet. Ein jeweiliger Mittenabgriff an der vierten und fünften Halbbrücke ist mit entsprechenden Anschlüssen des ersten benachbarten Submoduls verbunden. Die jeweiligen Ausgangsanschlüsse der zweiten und dritten Halbbrücke werden mit entsprechenden Anschlüssen des zweiten benachbarten Submoduls verbunden. Die Steuerung ist dazu konfiguriert, an den jeweiligen Ausgangsanschlüssen einen Wechselstrom zu erzeugen. Auf Grund der zusätzlichen vierten und fünften Halbbrücken sind die jeweiligen Zwischenkreiskondensatoren benachbarter Submodule parallel verschaltbar.

Bei dem erfindungsgemäßen modularen Multilevelkonverter können vorteilhaft Niederspannungskondensatoren oder ersatzweise Niederspannungsenergiespeicherzellen verwendet werden, um im Hochspannungsbereich mit Gleichstrominput umzugehen und Wechselstromoutput bereitzustellen, wodurch Gesamtkosten und Bauraum sehr gering gehalten werden. Der erfindungsgemäße modulare Multilevelkonverter erlaubt vorteilhaft bspw. bei einem Batteriepack mit 100 V Klemmenspannung als Gleichstromquelle eine Ausgangswechselspannung mit einer Amplitude zwischen 4.2 V (Drei-Stufen-Sechs-Phasen-System) und 400 V (Neun-Stufen-Einzelphasen-System).

Ferner wird ein System beansprucht, welches eine Gleichstromquelle, eine Last mit mindestens einer Phase, und einen erfindungsgemäßen modularen Multilevelkonverter umfasst, wobei der modulare Multilevelkonverter dazu konfiguriert ist, ein erfindungsgemäßes Verfahren auszuführen. Das System ist bspw. Teil eines Traktionssystems eines Fahrzeuges, wobei die Last ein Elektromotor ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Figuren werden zusammenhängend und übergreifend beschrieben, gleichen Komponenten sind dieselben Bezugszeichen zugeordnet.

Figur 1 zeigt ein generalisiertes Schaltungsschema in einer Ausgestaltung der erfindungsgemäßen Schaltungstopologie.

Figur 2 zeigt Schaltungsschemata mit unterschiedlicher Anzahl an Spannungsstufeneinheiten in weiteren Ausgestaltungen der erfindungsgemäßen Schaltungstopologie.

Figur 3 zeigt Strompfade bei einem Schaltungsschema mit fünf Spannungsstufen in einer noch weiteren Ausgestaltung der erfindungsgemäßen Schaltungstopologie.

Figur 4 zeigt eine Auswahl an Halbleiterschaltern für die erfindungsgemäße Schaltungstopologie.

Figur 5 zeigt ein Steuerungsschema für zweite und dritte Halbbrücken der erfindungsgemäßen Schaltungstopologie.

Figur 6 zeigt schematisch eine Schaltung in der Ausgestaltung der erfindungsgemäßen Schaltungstopologie.

Figur 7 zeigt schematisch eine parallele Verschaltung von Submodulen in einer Ausgestaltung des erfindungsgemäßen Multilevelkonverters.

Figur 8 zeigt schematisch eine serielle Verschaltung von Submodulen in einer weiteren Ausgestaltung des erfindungsgemäßen Multilevelkonverters.

Figur 9 zeigt zwei Ersatzschaltbilder zur Gleichspannungsausgabe in einer anderen Ausgestaltung der erfindungsgemäßen Schaltungstopologie.

Fig. 10 zeigt zwei weitere Schaltungsschemata mit paralleler Funktionalität in noch anderen Ausgestaltungen der erfindungsgemäßen Schaltungstopologie.

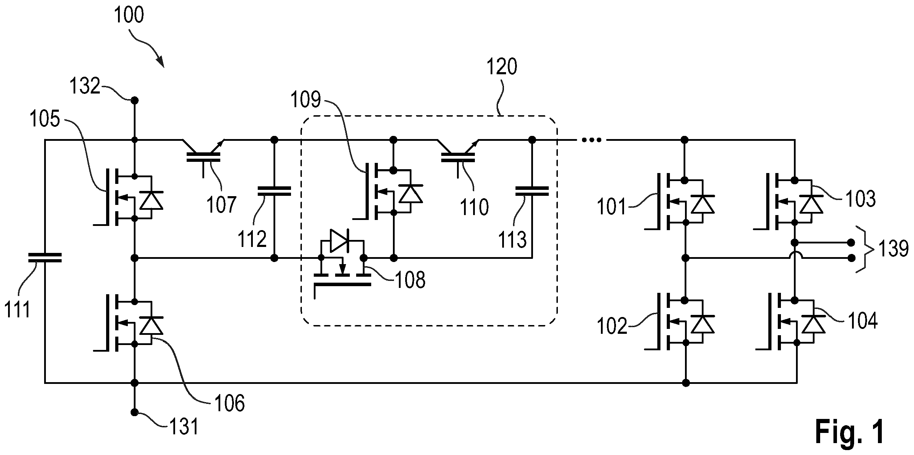

In Figur 1 wird eine generalisierte Schaltungstopologie 100 für ein i-tes Submodul in einer Ausgestaltung der erfindungsgemäßen Schaltungstopologie gezeigt. Zwischen einem unteren Eingangsanschluss 131 und einem oberen Eingangsanschluss 132 sind ein erster Zwischenkreiskondensator $C_{i1}$ 111 und parallel dazu eine erste Halbbrücke mit einem fünften Halbleiterschalter $S_{i5}$ 105 und einem sechsten Halbleiterschalter Sie 106 angeordnet. Weiter parallel dazu sind eine zweite Halbbrücke mit einem ersten Halbleiterschalter $S_{i1}$ 101 und einem zweiten Halbleiterschalter $S_{i2}$ 102 und eine dritte Halbbrücke mit einem dritten Halbleiterschalter $S_{i3}$ 103 und einem vierten Halbleiterschalter $S_{i4}$ 104 mit dem unteren Eingangsanschluss 131 und über eine jeweilig wiederholbare Spannungsstufeneinheit 120 und einen siebten Halbleiterschalter $S_{i7}$ 107 mit dem oberen Eingangsanschluss 132 verbunden. Zudem ist ein zweiter Zwischenkreiskondensator $C_{i2}$ zwischen einem Mittenabgriff der ersten Halbbrücke und dem siebten Halbleiterschalter $S_{i7}$ 107 angeordnet. Durch jeweiligen Mittenabgriff an der zweiten und dritten Halbbrücke ist eine Ausgangsspannung an einem Ausgangsanschluss 139 zu einer Last bereitgestellt. Die wiederholbare Spannungsstufeneinheit 120 weist einen dritten Zwischenkreiskondensator $C_{i3}$, eine weitere Halbbrücke, welche einen achten Halbleiterschalter Sie 108 und einen neunten Halbleiterschalter $S_{i9}$ 109 umfasst, sowie einen zehnten Halbleiterschalter auf. Durch jeweilige Wiederholung der Spannungsstufeneinheit 120 wird die generalisierte Schaltungstopologie 100 um jeweilig zwei Spannungsstufen erweitert, wodurch vorteilhaft die Ausgangsspannung entsprechend einer vorgegebenen Zahl an Spannungsstufen variierbar ist.

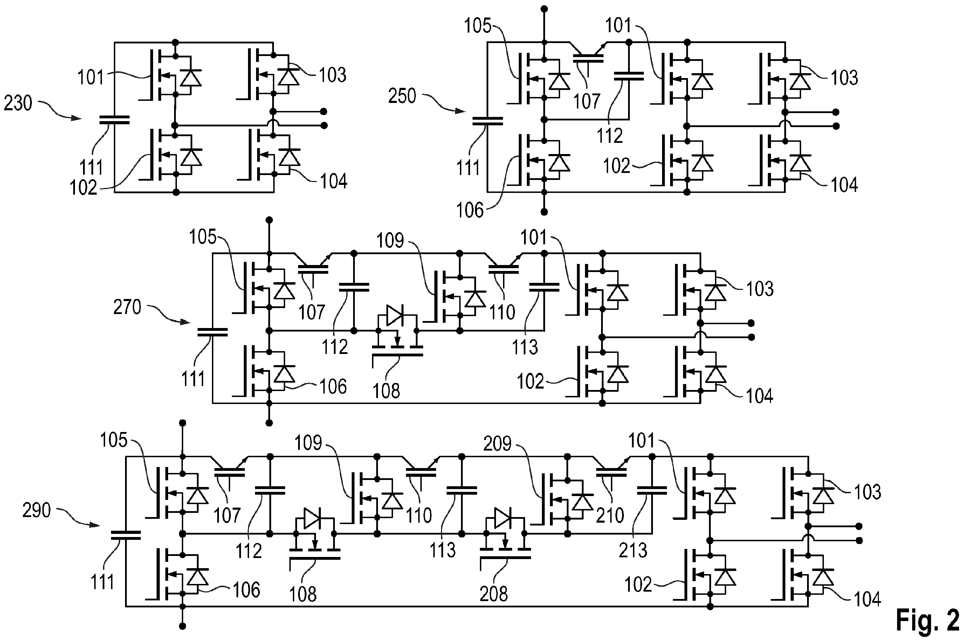

In Figur 2 werden Schaltungsschemata 230, 250, 270, 290 mit unterschiedlicher Anzahl an Spannungsstufeneinheiten in weiteren Ausgestaltungen der erfindungsgemäßen Schaltungstopologie gezeigt. Während eine aus dem Stand der Technik bekannte Drei-Level-Schaltungstopologie 230 aus der generalisierten Schaltungstopologie 100 in Fig. 1 durch Weglassen der ersten Halbbrücke mit Halbleiterschaltern 105 und 106 sowie weiterer Bauelemente 107 und 112 herleitbar ist, werden eine Fünf-Level-Schaltungstopologie 250, eine Sieben-Level-Schaltungstopologie 270 und eine Neun-Level-Schaltungstopologie 290 entsprechend einem Weglassen der Spannungsstufeneinheit 120, einer einfachen Anordnung der Spannungsstufeneinheit 120 und einer zweifachen Anordnung der Spannungsstufeneinheit 120 aus Fig. 1 erhalten. Bei der Neun-Level-Schaltungstopologie 290 kommen durch die wiederholte Anordnung ein wiederholter achter Halbleiterschalter $S_{i11}$ 208, ein wiederholter neunter Halbleiterschalter $S_{i12}$ 209, ein wiederholter zehnter Halbleiterschalter $S_{i13}$ 210 und ein wiederholter dritter Zwischenkreiskondensator $C_{i4}$ 213 hinzu.

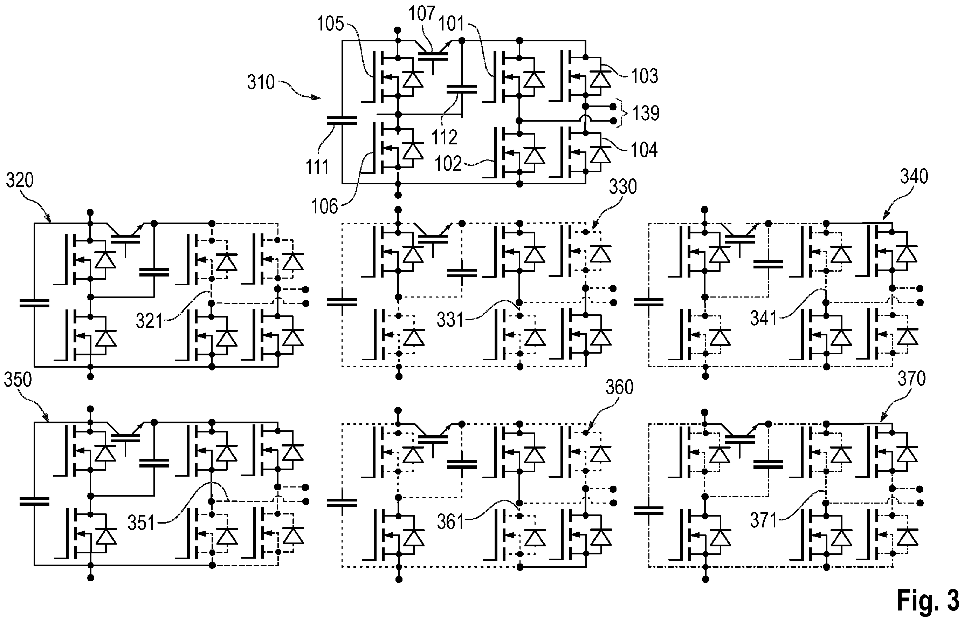

In Figur 3 werden Strompfade 321, 331, 341, 351, 361, 371 bei einem Schaltungsschema 310, 320, 330, 340, 350, 360, 370 mit fünf Spannungsstufen in einer noch weiteren Ausgestaltung der erfindungsgemäßen Schaltungstopologie gezeigt. Anhand der Fünf-Level-Schaltungstopologie 310 werden im Schaltungsschema 320 ein erster Nullspannungsstufenpfad 321, im Schaltungsschema 330 ein Positivspannungsstufenpfad 331, im Schaltungsschema 340 ein Negativspannungsstufenpfad 341, im Schaltungsschema 350 ein zweiter Nullspannungsstufenpfad 351, im Schaltungsschema 360 ein Positivdoppelspannungsstufenpfad 361 und im Schaltungsschema 370 ein Negativdoppelspannungsstufenpfad 371 dargestellt. Damit werden sechs verschiedene Strompfade 321, 331, 341, 351, 361, 371 aufgezeigt, woraus fünf Spannungsstufen -2$V_{C_{i1}}$, -$V_{C_{i1}}$, 0, +$V_{C_{i1}}$, +2$V_{C_{i1}}$ resultieren. Dies wird über sieben (Leistungs-)Halbleiterschalter $S_{i1}$ 101, $S_{i2}$ 102, $S_{i3}$ 103, $S_{i4}$ 104, $S_{i5}$ 105, Sie 106, $S_{i7}$ 107 und zwei Zwischenkreiskondensatoren $C_{i1}$ 111 und $C_{i2}$ 112 erreicht, wobei in den zweiten und dritten Halbbrücken jeweils obere Halbleiterschalter $S_{i1}$ 101 und $S_{i3}$ 103 komplementär zu den jeweils unteren Halbleiterschaltern $S_{i2}$ 102 und $S_{i4}$ 104 geschaltet sind. Es ist zu beachten, dass entweder die unteren Halbleiterschalter ($S_{i2}$ 102 und $S_{i4}$ 104) oder die oberen Halbleiterschalter ($S_{i1}$ 101 und $S_{i3}$ 103) der zweiten und dritten Halbbrücken jeweilig eine interne antiparallele Diode aufweisen, während diese bei den jeweilig anderen Halbleiterschaltern der zweiten und dritten Halbbrücke, also den entsprechend oberen Halbleiterschaltern ($S_{i1}$ 101 und $S_{i3}$ 103) oder unteren Halbleiterschaltern ($S_{i2}$ 102 und $S_{i4}$ 104), optional sind. Genauso optional sind interne antiparallele Dioden bei dem fünften Halbleiterschalter $S_{i5}$ 105 und dem sechsten Halbleiterschalter Sie 106 der ersten Halbbrücke, während der siebte Halbleiterschalter $S_{i7}$ 107 keine interne antiparallele Diode aufweisen darf. Wie an der erfindungsgemäßen Schaltungstopologie zu erkennen ist, ist ein negativer Anschluss des ersten Zwischenkreiskondensators $C_{i1}$ 111 intrinsisch mit einem Nullpunkt einer Lastphase verbunden. Je nach einem jeweiligen Schaltungszustand des Submoduls ist eine von fünf Spannungsstufen der Ausgangsspannung darstellbar, was im Folgenden weiter beschrieben wird.

Zunächst gibt es mit Schaltungsschemata 320 und 350 zwei Nullspannungsstufenpfade 321 und 351, welche keinen Spannungsbeitrag zu einem durch den Ausgangsanschluss 139 fließenden Laststrom liefern, wobei entweder beim ersten Nullspannungsstufenpfad 321 die Halbleiterschalter $S_{i1}$ 101 und $S_{i3}$ 103 und beim zweiten Nullspannungsstufenpfad 351 die Halbleiterschalter $S_{i2}$ 102 und $S_{i4}$ 104 geschlossen sind. Währenddessen von den jeweiligen Nullspannungsstufenpfaden 321 und 351 nicht betroffen sind die beiden Zwischenkreiskondensatoren $C_{i1}$ 111 und $C_{i2}$ 112, wobei es aber möglich ist, dass diese, gegebenenfalls parallel geschaltet ihre Kondensatorspannungen ausgleichend, von einer mit den Eingangsanschlüssen verbundenen Gleichspannungsquelle aufgeladen werden. Eine Gleichspannungsquelle bzw. eine Gleichstromquelle kann als Batterie, Kondensator, Solarzelle oder Solarmodul, Gleichspannungs- bzw. Gleichstromausgang eines elektrischen Wandlers (bspw. Leistungselektronik), Gleichrichterausgang oder Ähnliches realisiert sein,

Der Positivspannungsstufenpfad 331 wird im Schaltungsschema 330 durch geschlossene Halbleiterschalter $S_{i2}$ 102, $S_{i3}$ 103, Sie 106 und $S_{i7}$ 107 gebildet und fügt dem Laststrom eine Spannungsstufe +$V_{C_{i1}}$ hinzu. Durch die jeweilig geschlossenen Halbleiterschalter wird der zweite Zwischenkreiskondensator $C_{i2}$ 112 bis zur Kondensatorspannung $V_{C_{i1}}$ aufgeladen, so dass $V_{C_{i1}} = V_{C_{i2}}$.

Zwei Spannungsstufen $V_i = V_{C_{i1}} + V_{C_{i2}}$ werden im Schaltungsschema 360 durch den Positivdoppelspannungsstufenpfad 361 mit den beiden Zwischenkreiskondensatoren $C_{i1}$ 111 und $C_{i2}$ 112 erreicht. Da in einem Schaltzyklus zur Erzeugung einer Wechselspannung ein Schaltzustand mit zwei positiven Spannungsstufen auf einen Schaltzustand mit einer positiven Spannungsstufe folgt, wurde der Zwischenkreiskondensator $C_{i2}$ 112 im zuvor angesteuerten Schaltzustand mit einer Spannungsstufe auf die Kondensatorspannung $V_{C_{i2}} = V_{C_{i1}}$ aufgeladen. Damit sind beide Kondensatorspannungen gleich und es gilt $V_i = +2V_{C_{i1}}$. Der Positivdoppelspannungsstufenpfad 361 wird mittels geschlossenen Halbleiterschaltern $S_{i2}$ 102, $S_{i3}$ 103 und $S_{i5}$ 105 gebildet, während die restlichen Halbleiterschalter des Submoduls geöffnet sind.

Beim Negativspannungsstufenpfad 341 sind die Halbleiterschalter $S_{i1}$ 101, $S_{i4}$ 104, Sie 106 und $S_{i7}$ 107 geschlossen, wodurch sich eine Ausgangsspannung $V_i = -V_{C_{i1}}$ ergibt. Dabei bilden insbesondere die beiden geschlossenen Halbleiterschalter Sie 106 und $S_{i7}$ 107 einen Strompfad, durch den der zweite Zwischenkreiskondensator $C_{i2}$ 112 auf die Kondensatorspannung des ersten Zwischenkreiskondensators $C_{i1}$ 111 aufgeladen wird, woraus bei abgeschlossener Aufladung schließlich $V_{C_{i2}} = V_{C_{i1}}$ resultiert.

Zum Negativdoppelspannungsstufenpfad 371 kommt es durch geschlossene Halbleiterschalter $S_{i1}$ 101, $S_{i4}$ 104, und $S_{i5}$ 105 und es wird mit $V_i = -(V_{C_{i1}} + V_{C_{i2}})$ die unterste Ausgangsspannung gebildet. Da im Schaltzyklus zur Erzeugung der Wechselspannung ein Schaltzustand mit zwei negativen Spannungsstufen auf einen Schaltzustand mit einer negativen Spannungsstufe folgt, wurde der Zwischenkreiskondensator $C_{i2}$ 112 im zuvor angesteuerten Schaltzustand mit einer Spannungsstufe auf die Kondensatorspannung $V_{C_{i2}} = V_{C_{i1}}$ aufgeladen. Damit sind beide Kondensatorspannungen gleich und es gilt $V_i = -2V_{C_{i1}}$.

Die zu einer jeweiligen Ausgangsspannung führenden Submodulzustände in Abhängigkeit von einer jeweiligen Halbleiterschalterstellung sind in Tabelle 1 dargestellt.

Tab. 1

| Schema | $S_{i1}$ | $S_{i2}$ | $S_{i3}$ | $S_{i4}$ | $S_{i5}$ | $S_{i6}$ | $S_{i7}$ | $V_i$ |
|---|---|---|---|---|---|---|---|---|
| 320 | ON | OFF | ON | OFF | OFF | OFF | OFF | 0 |
| 330 | OFF | ON | ON | OFF | OFF | ON | ON | +$V_{C_{i1}}$ |

(fortgesetzt)

| Schema | $S_{i1}$ | $S_{i2}$ | $S_{i3}$ | $S_{i4}$ | $S_{i5}$ | $S_{i6}$ | $S_{i7}$ | $V_i$ |
|---|---|---|---|---|---|---|---|---|
| 340 | ON | OFF | OFF | ON | OFF | ON | ON | $-V_{C_{i1}}$ |
| 350 | OFF | ON | OFF | ON | OFF | OFF | OFF | 0 |
| 360 | OFF | ON | ON | OFF | ON | OFF | OFF | $+2V_{C_{i1}}$ |
| 370 | ON | OFF | OFF | ON | ON | OFF | OFF | $-2V_{C_{i1}}$ |

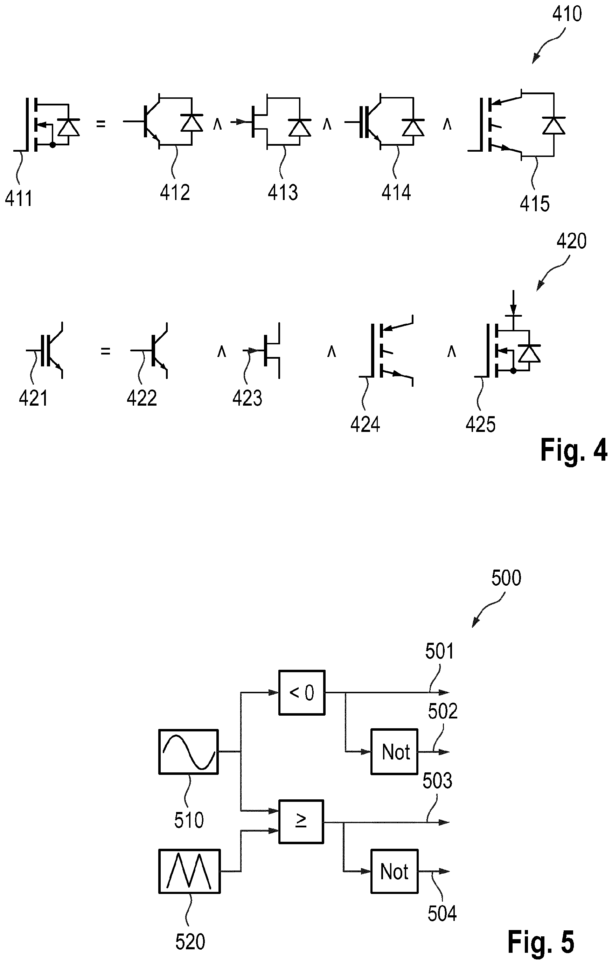

In Figur 4 wird eine Auswahl an Halbleiterschaltern für die erfindungsgemäße Schaltungstopologie gezeigt. Wie voranstehend erläutert, ist bei manchen Halbleiterschaltern im Submodul die antiparallele Diode notwendig, während sie bei anderen Halbleiterschaltern nicht unbedingt notwendig oder gar untersagt ist. Eine Auswahl an Halbleiterschaltern mit antiparalleler Diode zeigt Schaubild 410. Ein in den Schaltungsschemata der Figuren für die Halbleiterschalter der Halbbrücken verwendetes Symbol steht zwar für einen Metalloxid-Halbleiter-Feldeffekttransistor MOSFET 411, kann aber schaltungstechnisch auch durch einen Bipolartransistor (BJT) 412 oder einen Feldeffekttransistor (FET) 413 oder einen Bipolartransistor mit isolierter Gate-Elektrode und npn-Struktur (IGBT/NPN) 414 oder einen n-Kanal Bipolartransistor mit isolierter Gate-Elektrode (IGBT/N-Kanal) 415 ersetzt werden, jeweilig mit der antiparallelen Diode versehen. Die gezeigte Auswahl soll aber nicht weitere Halbleiterschalter-Typen mit antiparalleler Diode ausschließen. Eine Auswahl an Halbleiterschaltern ohne antiparallele Diode zeigt Schaubild 420. Ein in den Schaltungsschemata der Figuren für solche Halbleiterschalter verwendetes Symbol steht zwar für einen Bipolartransistor mit isolierter Gate-Elektrode und npn-Struktur (IGBT/NPN) 421, kann aber schaltungstechnisch auch durch einen Bipolartransistor (BJT) 422 oder einen Feldeffekttransistor (FET) 423 oder einen n-Kanal Bipolartransistor mit isolierter Gate-Elektrode (IGBT/N-Kanal) 424 oder einen Feldeffekttransistor (FET) mit vorgeschalteter Diode 425 ersetzt werden. Auch hier soll aber die gezeigte Auswahl nicht weitere Halbleiterschalter-Typen ohne antiparallele Diode ausschließen.

In Figur 5 wird ein Steuerungsschema 500 für zweite und dritte Halbbrücken der erfindungsgemäßen Schaltungstopologie mittels einer Pulsdauermodulation gezeigt. Zur Erzeugung einer sinusförmigen Wellenform in der Ausgangsspannung jedes Submoduls wird die Pulsdauermodulation herangezogen, während durch Änderung einer jeweiligen Referenzspannung 510 für ein jeweiliges Submodul Spannungsreferenzen für Multiphasenspannungen bereitgestellt werden. Umgesetzt wird dies mittels des Steuerungsschemas 500, wobei die Referenzspannung 510 der i-ten Phase $V_i^*$ und ein Trägersignal 520 zur Generierung eines Gatesignals 501 für Halbleiterschalter $S_{i1}$, eines Gatesignals 502 für Halbleiterschalter $S_{i2}$, eines Gatesignals 503 für Halbleiterschalter $S_{i3}$, und eines Gatesignals 504 für Halbleiterschalter $S_{i4}$ dient. Eine ganze Reihe von Steuerungsverfahren zur Lastregelung sind denkbar, um die Referenzspannung 510 zu generieren. Als einfaches Beispiel kann eine sinusförmige Wellenform dienen:

$$V_i^* = \sin\left(2\pi f t + \frac{2\pi i}{N}\right) \qquad . \qquad\qquad (12)$$

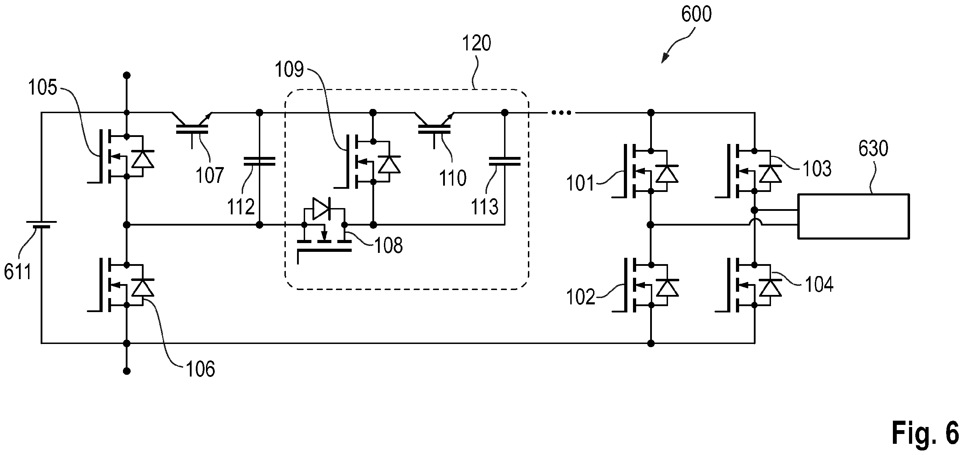

In Figur 6 wird schematisch eine Schaltung 600 mit einer Einzellast 630 in einer ersten Ausgestaltung der erfindungsgemäßen Schaltungstopologie gezeigt. Ohne mit weiteren Submodulen verbunden zu sein erzeugt die Schaltung 600 aus einer Gleichstromquelle 611 einen Einphasenwechselstrom für die Einzellast 630.

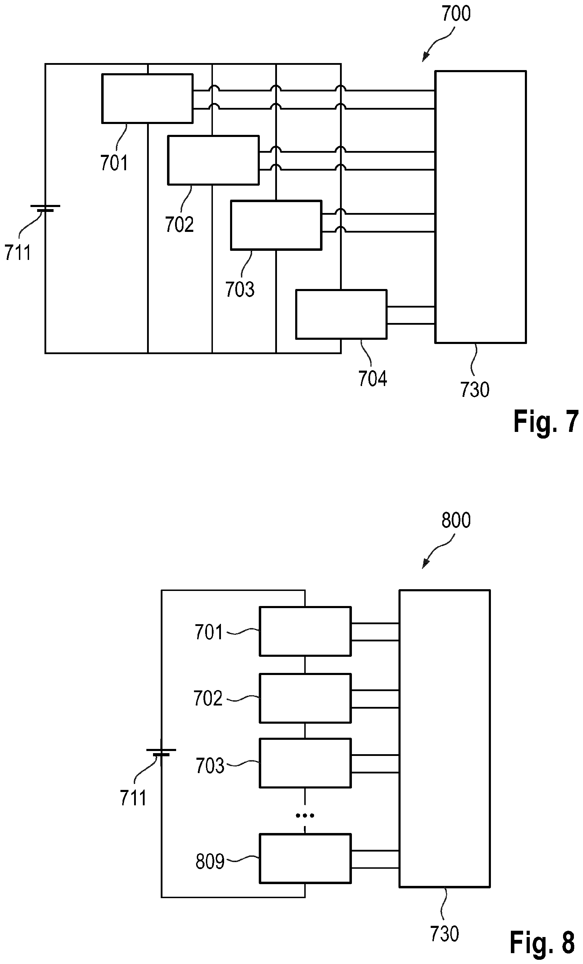

In Figur 7 wird schematisch eine parallele Verschaltung 700 von Submodulen in einer zweiten Ausgestaltung des erfindungsgemäßen Multilevelkonverters gezeigt. Jeweilige an ihren Eingangsanschlüssen parallel mit einer Gleichstromquelle 711 verbundene Submodule 701, 702, 703, 704 erzeugen jeweils eine Phase eines Multiphasenstromes für eine Multiphasenlast 730.

In Figur 8 wird schematisch eine serielle Verschaltung 800 von Submodulen in einer weiteren Ausgestaltung des erfindungsgemäßen Multilevelkonverters gezeigt. Jeweilige Submodule 701, 702, 703, 809 erzeugen jeweils eine Phase eines Multiphasenstromes für eine Multiphasenlast 730. Die Submodule 701, 702, 703, 809 sind an ihren Eingangsanschlüssen seriell miteinander verbunden, wobei ein erstes Submodul 701 und ein N-tes Submodul 809 mit der Gleichstromquelle 711 verbunden sind. Dadurch wird eine Eingangsspannung eines jeden Submoduls 701, 702, 703, 809 gegenüber einer Klemmenspannung $V_{DC}$ der Gleichstromquelle 711 um einen Teiler 1/N herabgesetzt (s. Gl. (9)).

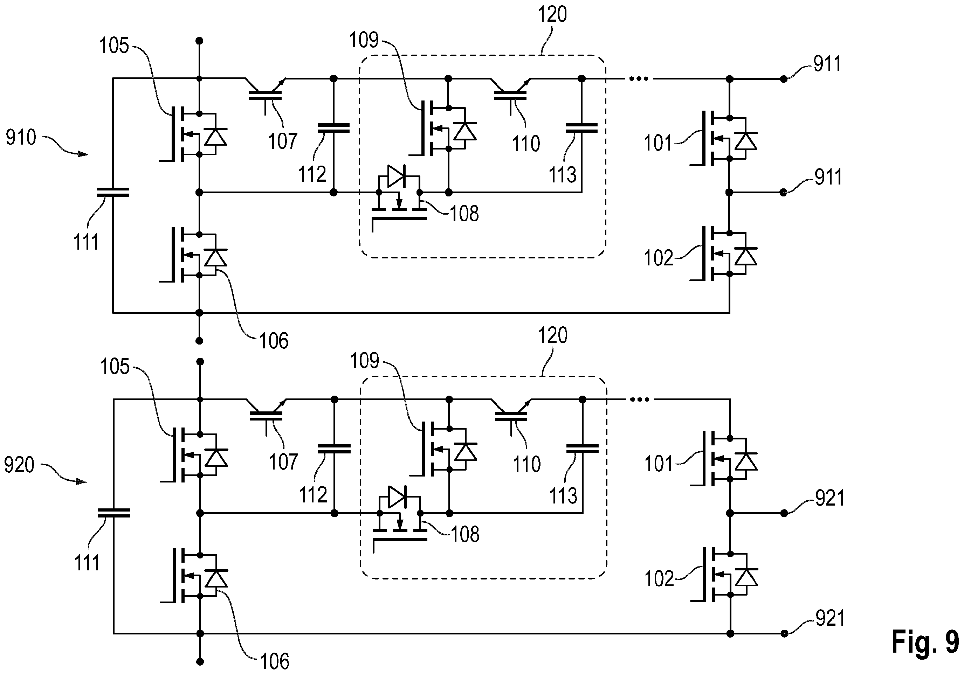

In Figur 9 werden zwei Ersatzschaltbilder 910, 920 zur Gleichspannungsausgabe in einer anderen Ausgestaltung der erfindungsgemäßen Schaltungstopologie gezeigt. Durch geeignete Ansteuerung eines jeweiligen Submoduls und insbesondere der Halbleiterschalter $S_{i3}$ 103 und $S_{i4}$ 104 in der dritten Halbbrücke (s. Fig. 1), kann das jeweilige Submodul zu einer Ausgabe von Gleichspannung, je nach Anzahl von Spannungsstufeneinheiten 120 mit unterschiedlich schaltbarem Spannungswert gebildet, herangezogen werden. Während die weiteren Halbleiterschalter 105, 106, 107, 108, 109, 110 des jeweiligen Submoduls geeignet zur Erzeugung einer gewählten Spannungsstufe geschaltet sind, liegt im Ersatzschaltbild 910 der dritte Halbleiterschalter $S_{i3}$ 103 aus Fig. 1 geöffnet vor, so dass sich Gleichspannungsanschlüsse 911 zur Verbindung mit9 einer Gleichspannungslast ergeben, wohingegen im Ersatzschaltbild 920 der vierte Halbleiterschalter $S_{i4}$ 104 aus Fig. 1 geöffnet vorliegt, so dass sich Gleichspannungsanschlüsse 921 zur Verbindung mit der Gleichspannungslast ergeben,

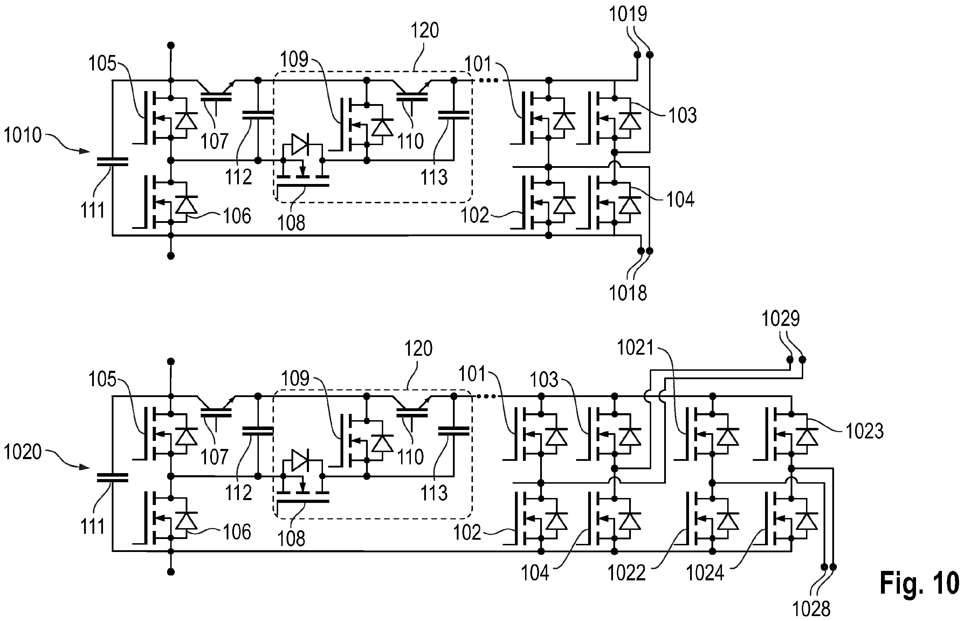

In Fig. 10 werden zwei Schaltungsschemata 1010, 1020 mit paralleler Funktionalität in noch anderen Ausgestaltungen der erfindungsgemäßen Schaltungstopologie gezeigt. In Schaltungsschema 1010 wird in Anlehnung an bekannten Umsetzungen paralleler Funktionalität in modularen Multilevelkonvertern ein Anschluss 1018 zu einem bspw. in einem Strang vorausgehend benachbarten Submodul und ein Anschluss 1019 zu einem in dem Strang nachfolgend benachbarten Submodul gebildet, allerdings zur Ausgabe eines Gleichstroms. Im Schaltungsschema 1020 werden in der erfindungsgemäßen Schaltungstopologie (Bezugzeichen 100 in Fig.1) zusätzlich eine vierte Halbbrücke mit einem elften Halbleiterschalter $S_{i11}$ 1021 und einem zwölften Halbleiterschalter $S_{i12}$ 1022, und eine fünfte Halbbrücke mit einem dreizehnten Halbleiterschalter $S_{i13}$ 1023 und einem vierzehnten Halbleiterschalter $S_{i14}$ 1024 angeordnet. Mit den Mittenabgriffen an der zweiten und dritten Halbbrücke (in Fig. 1 mit Bezugzeichen 139 bezeichnet) wird in Anlehnung an bekannte Umsetzungen paralleler Funktionalität in modularen Multilevelkonvertern, bspw. in dem voranstehend erwähnten MMSPC, ein Anschluss 1029 zu einem im Strang nachfolgend benachbarten Submodul gebildet. Durch Mittenabgriff an den beiden neu hinzugekommen vierten und fünften Halbbrücken wird ein Anschluss 1028 zu einem in dem Strang vorausgehend benachbarten Submodul gebildet. Das Schaltungsschema 1020 ist für einen Wechselstrom vorgesehen. Durch die erfindungsgemäße Anordnung der ersten Halbbrücke mit den Halbleiterschaltern $S_{i5}$ 105 und Sie 106 und der wiederholbaren Spannungsstufeneinheit 120 kann ein Spannungsbeitrag des jeweiligen Submoduls zum Wechselstrom gestaltet werden.

**Bezugszeichenliste**

| | |
|---|---|
| 100 | Generalisierte Schaltungstopologie für i-tes Submodul |
| 101 | Erster Halbleiterschalter $S_{i1}$ |
| 102 | Zweiter Halbleiterschalter $S_{i2}$ |
| 103 | Dritter Halbleiterschalter $S_{i3}$ |
| 104 | Vierter Halbleiterschalter $S_{i4}$ |
| 105 | Fünfter Halbleiterschalter $S_{i5}$ |
| 106 | Sechster Halbleiterschalter $S_{i6}$ |
| 107 | Siebter Halbleiterschalter $S_{i7}$ |
| 108 | Achter Halbleiterschalter $S_{i8}$ |
| 109 | Neunter Halbleiterschalter $S_{i9}$ |
| 110 | Zehnter Halbleiterschalter $S_{i10}$ |
| 111 | Erster Zwischenkreiskondensator $C_{i1}$ |
| 112 | Zweiter Zwischenkreiskondensator $C_{i2}$ |
| 113 | Dritter Zwischenkreiskondensator $C_{i3}$ |
| 120 | Wiederholbare Spannungsstufeneinheit |
| 131 | Unterer Eingangsanschluss |
| 132 | Oberer Eingangsanschluss |
| 139 | Anschluss zur Last |
| 208 | Wiederholter achter Halbleiterschalter Si11 |
| 209 | Wiederholter neunter Halbleiterschalter Si12 |
| 210 | Wiederholter zehnter Halbleiterschalter $S_{i13}$ |
| 213 | Wiederholter dritter Zwischenkreiskondensator $C_{i4}$ |
| 230 | Schaltung mit Drei-Level-Schaltungstopologie |
| 250 | Schaltung mit Fünf-Level-Schaltungstopologie |
| 270 | Schaltung mit Sieben-Level-Schaltungstopologie |
| 290 | Schaltung mit Neun-Level-Schaltungstopologie |
| 310 | Fünf-Level-Schaltungstopologie |
| 320 | Schaltungsschema mit Ausgangsspannung null |
| 321 | Erster Nullspannungsstufenpfad |
| 330 | Schaltungsschema mit Ausgangsspannung $V_i$ |
| 331 | Positivspannungsstufenpfad |

| | |
|---|---|
| 340 | Schaltungsschema mit Ausgangsspannung $-V_i$ |
| 341 | Negativspannungsstufenpfad |
| 350 | Schaltungsschema mit Ausgangsspannung null |
| 351 | Zweiter Nullspannungsstufenpfad |
| 360 | Schaltungsschema mit Ausgangsspannung $2V_i$ |
| 361 | Positivdoppelspannungsstufenpfad |
| 370 | Schaltungsschema mit Ausgangsspannung $-2V_i$ |
| 371 | Negativdoppelspannungsstufenpfad |
| 410 | Halbleiterschalter mit antiparalleler Diode |
| 411 | MOSFET |
| 412 | Bipolartransistor BJT |
| 413 | FET |
| 414 | IGBT (NPN) |
| 415 | IGBT (N-Kanal) |
| 420 | Halbleiterschalter ohne antiparalleler Diode |
| 421 | IGBT (NPN) |
| 422 | BJT |
| 423 | FET |
| 424 | IGBT (N-Kanal) |
| 425 | FET und Diode |
| 500 | Steuerungsschema zur Pulsdauermodulation |
| 501 | Zu Gate $S_{i1}$ |
| 502 | Zu Gate $S_{i2}$ |
| 503 | Zu Gate $S_{i3}$ |
| 504 | Zu Gate $S_{i4}$ |
| 510 | Referenzspannung der i-ten Phase $V_i^*$ |
| 520 | Trägersignal |
| 600 | Schaltungsschema zur Einzellast |
| 611 | Gleichstromquelle |
| 630 | Einzelphasenlast |
| 700 | Schaltungsschema mit paralleler Verschaltung |
| 711 | Gleichstromquelle |
| 701 | Erstes Submodul |
| 702 | Zweites Submodul |
| 703 | Drittes Submodul |
| 704 | Viertes Submodul |
| 730 | Multiphasenlast |
| 800 | Schaltungsschema mit serieller Verschaltung |
| 809 | N-tes Submodul |
| 910 | Ersatzschaltbild mit erster Variante zur Gleichstromausgabe |
| 911 | Anschluss zur Last |
| 920 | Ersatzschaltbild mit zweiter Variante zur Gleichstromausgabe |
| 921 | Anschluss zur Last |
| 1010 | Schaltungsschema mit Gleichstromausgabe als erste Variante |
| 1018 | Anschluss zum vorausgehenden Submodul |
| 1019 | Anschluss zum nachfolgenden Submodul |
| 1020 | Schaltungsschema mit Wechselstromausgabe als zweite Variante |
| 1021 | Elfter Halbleiterschalter |
| 1022 | Zwölfter Halbleiterschalter |
| 1023 | Dreizehnter Halbleiterschalter |
| 1024 | Vierzehnter Halbleiterschalter |
| 1028 | Anschluss zum vorausgehenden Submodul |
| 1029 | Anschluss zum nachfolgenden Submodul |

**Patentansprüche**

1.  Verfahren zur Anordnung einer Schaltung gemäß einer Schaltungstopologie (100, 250, 270, 290, 310, 600, 910, 920, 1010, 1020) für einen modularen Multilevelkonverter, wobei der modulare Multilevelkonverter eine Steuerung (500) und mindestens ein Submodul (701, 702, 703, 704, 809) aufweist, wobei in dem mindestens einen Submodul (701, 702, 703, 704, 809) eine Mehrzahl an Halbleiterschaltern (101, 102, 103, 104, 105, 106, 107, 108, 109, 110, 208, 209, 210, 1021, 1022, 1023, 1024) und eine Mehrzahl an Zwischenkreiskondensatoren (111, 112, 113, 210, 213) gemäß der Schaltungstopologie (100, 250, 270, 290, 310, 600, 910, 920, 1010, 1020) angeordnet werden, wobei die Schaltungstopologie (100, 250, 270, 290, 310, 600, 910, 920, 1010, 1020) zwischen einem unteren Eingangsanschluss (131) und einem oberen Eingangsanschluss (132) einen ersten Zwischenkreiskondensator (111) und parallel dazu eine erste Halbbrücke, weiter parallel dazu eine zweite und eine dritte Halbbrücke, die mit dem unteren Eingangsanschluss (131) und über einen siebten Halbleiterschalter (107) mit dem oberen Eingangsanschluss (132) verbunden sind, und zudem einen zweiten Zwischenkreiskondensator (112), der zwischen einem Mittenabgriff der ersten Halbbrücke und der Verbindung der zweiten und dritten Halbbrücke mit dem siebten Halbleiterschalter (107) angeordnet ist, vorsieht, wobei die Schaltungstopologie (100, 250, 270, 290, 310, 600, 910, 920, 1010, 1020) entsprechend einer vorgegebenen Zahl an Spannungsstufen durch eine wahlweise wiederholbare Spannungsstufeneinheit (120) um jeweilig zwei Spannungsstufen erweiterbar ist, wobei durch die Steuerung bei der zweiten und der dritten Halbbrücke ein jeweils oberer Halbleiterschalter (101, 103) komplementär zu einem jeweils unteren Halbleiterschalter (102, 104) geschaltet wird, wobei der untere Eingangsanschluss (131) entweder mit einem oberen Eingangsanschluss (132) eines ersten benachbarten Submoduls (701, 702, 703, 704, 809) oder mit einem negativen Pol einer Gleichstromquelle (711) verbunden wird und der obere Eingangsanschluss (132) entweder mit einem unteren Eingangsanschluss (131) eines zweiten benachbarten Submoduls (701, 702, 703, 704, 809) oder mit einem positiven Pol der Gleichstromquelle (711) verbunden wird, und wobei durch jeweiligen Mittenabgriff an den zwei Halbbrücken ein jeweiliger Ausgangsanschluss (139) bereitgestellt wird.

2. Verfahren nach Anspruch 1, wobei das mindestens eine Submodul (701, 702, 703, 704, 809) an seinen jeweiligen Ausgangsanschlüssen (139) mit einer Phase einer Last (630) verbunden wird, und wobei durch Steuerung (500) der Halbleiterschalter (101, 102, 103, 104) mittels einer Pulsdauermodulation (500) ein Wechselstrom erzeugt wird.

3. Verfahren nach Anspruch 1 oder 2, wobei eine Anzahl an Submodulen (701, 702, 703, 809) gemäß einer vorgegebenen Zahl an Phasen der Last (730) gewählt wird und die Submodule (701, 702, 703, 809) seriell miteinander verschaltet werden.

4. Verfahren nach Anspruch 1 oder 2, wobei eine Anzahl an Submodulen (701, 702, 703, 704) gemäß einer vorgegebenen Zahl an Phasen der Last (730) gewählt wird und die Submodule (701, 702, 703, 704) parallel mit der Gleichstromquelle (711) verschaltet werden.

5. Verfahren nach Anspruch 1, wobei zur Erzeugung einer Gleichspannung durch die Steuerung in mindestens einem Submodul wahlweise entweder in der zweiten Halbbrücke der obere Halbleiterschalter (101) offen und in der dritten Halbbrücke der obere Halbleiterschalter (103) geschlossen geschaltet werden oder in der zweiten Halbbrücke der untere Halbleiterschalter (102) offen und in der dritten Halbbrücke der untere Halbleiterschalter (104) geschlossen geschaltet werden.

6. Verfahren nach Anspruch 1, wobei ein erster Ausgangsanschluss (1018) der zweiten Halbbrücke und eine Verbindung (1018) zum unteren Eingangsanschluss mit entsprechenden Anschlüssen des ersten benachbarten Submoduls verbunden werden, wobei ein zweiter Ausgangsanschluss (1019) der dritten Halbbrücke und eine Verbindung zum oberen Eingangsanschluss (1019) mit entsprechenden Anschlüssen des zweiten benachbarten Submoduls verbunden werden, und wobei durch Instrumentalisierung eines parallelen Schaltzustandes bei modularen Multi-velkonvertern mit serieller und paralleler Konnektivität ein Beitrag zu einer Gesamtgleichspannungsausgabe erzeugt wird.

7. Verfahren nach Anspruch 1, wobei parallel zu den zweiten und dritten Halbbrücken eine vierte und eine fünfte Halbbrücke angeordnet werden, wobei ein jeweiliger Mittenabgriff (1028) an der vierten und fünften Halbbrücke mit entsprechenden Anschlüssen des ersten benachbarten Submoduls verbunden wird, wobei die jeweiligen Ausgangsanschlüsse (1029) der zweiten und dritten Halbbrücke mit entsprechenden Anschlüssen des zweiten benachbarten Submoduls verbunden werden, und wobei durch die Steuerung an den jeweiligen Ausgangsanschlüssen (1028, 1029) ein Wechselstrom erzeugt wird, wobei auf Grund der zusätzlichen vierten und fünften Halbbrücken die jeweiligen Zwischenkreiskondensatoren (111, 112, 113) benachbarter Submodule parallel verschaltbar sind.

8. Modularer Multilevelkonverter, wobei der modulare Multilevelkonverter eine Steuerung und mindestens ein Submodul (701, 702, 703, 704, 809) aufweist, wobei in dem mindestens einen Submodul (701, 702, 703, 704, 809) eine Mehrzahl an Halbleiterschaltern (101, 102, 103, 104, 105, 106, 107, 108, 109, 110, 208, 209, 210, 1021, 1022, 1023, 1024) und eine Mehrzahl an Zwischenkreiskondensatoren (111, 112, 113, 210, 213) gemäß einer Schaltungstopologie (100, 250, 270, 290, 310, 600, 910, 920, 1010, 1020) angeordnet sind, wobei die Schaltungstopologie (100, 250, 270, 290, 310, 600, 910, 920, 1010, 1020) zwischen einem unteren Eingangsanschluss (131) und einem oberen Eingangsanschluss (132) einen ersten Zwischenkreiskondensator (111) und parallel dazu eine erste Halbbrücke, weiter parallel dazu eine zweite und eine dritte Halbbrücke, die mit dem unteren Eingangsanschluss (131) und über einen siebten Halbleiterschalter (107) mit dem oberen Eingangsanschluss (132) verbunden sind, und zudem einen zweiten Zwischenkreiskondensator (112), der zwischen einem Mittenabgriff der ersten Halbbrücke und der Verbindung der zweiten und dritte Halbbrücke mit dem siebten Halbleiterschalter (107) angeordnet ist, vorsieht, wobei die Schaltungstopologie (100, 250, 270, 290, 310, 600, 910, 920, 1010, 1020) entsprechend einer vorgegebenen Zahl an Spannungsstufen durch eine wahlweise wiederholbare Spannungsstufeneinheit (120) um jeweilig zwei Spannungsstufen erweiterbar ist, wobei die Steuerung dazu konfiguriert ist, bei der zweiten und der dritten Halbbrücke einen jeweils oberen Halbleiterschalter (101, 103) komplementär zu einem jeweils unteren Halbleiterschalter (102, 104) zu schalten, wobei der untere Eingangsanschluss (131) entweder mit einem oberen Eingangsanschluss (132) eines ersten benachbarten Submoduls oder mit einem negativen Pol einer Gleichstromquelle (711) verbunden ist und der obere Eingangsanschluss (132) entweder mit einem unteren Eingangsanschluss (131) eines zweiten benachbarten Submoduls oder mit einem positiven Pol der Gleichstromquelle (711) verbunden ist, und wobei durch jeweiligen Mittenabgriff an den zwei Halbbrücken ein jeweiliger Ausgangsanschluss (139) bereitgestellt ist.

9. Modularer Multilevelkonverter nach Anspruch 8, wobei das mindestens eine Submodul (701, 702, 703, 704, 809) an seinen jeweiligen Ausgangsanschlüssen (139) mit einer Phase einer Last (630) verbunden ist, und wobei die Steuerung dazu konfiguriert ist, mittels einer Pulsdauermodulation (500) einen Wechselstrom zu erzeugen.

10. Modularer Multilevelkonverter nach Anspruch 8 oder 9, wobei eine Anzahl an Submodulen (701, 702, 703, 809) gemäß einer vorgegebenen Zahl an Phasen der Last (730) gewählt ist und die Submodule (701, 702, 703, 809) seriell miteinander verschaltet sind.

11. Modularer Multilevelkonverter nach Anspruch 8 oder 9, wobei eine Anzahl an Submodulen (701, 702, 703, 704) gemäß einer vorgegebenen Zahl an Phasen der Last (730) gewählt ist und die Submodule (701, 702, 703, 704) parallel mit der Gleichstromquelle (711) verschaltet sind.

12. Modularer Multilevelkonverter nach Anspruch 8, wobei zur Erzeugung einer Gleichspannung die Steuerung dazu konfiguriert ist, wahlweise entweder in der zweiten Halbbrücke den oberen Halbleiterschalter (101) offen und in der dritten Halbbrücke den oberen Halbleiterschalter (103) geschlossen zu halten oder in der zweiten Halbbrücke den unteren Halbleiterschalter (102) offen und in der dritten Halbbrücke den unteren Halbleiterschalter (104) geschlossen zu halten.

13. Modularer Multilevelkonverter nach Anspruch 8, wobei ein erster Ausgangsanschluss (1018) der zweiten Halbbrücke und eine Verbindung (1018) zum unteren Eingangsanschluss mit entsprechenden Anschlüssen des ersten benachbarten Submoduls verbunden sind, wobei ein zweiter Ausgangsanschluss (1019) der dritten Halbbrücke und eine Verbindung (1019) zum oberen Eingangsanschluss mit entsprechenden Anschlüssen des zweiten benachbarten Submoduls verbunden sind, und wobei die Steuerung dazu konfiguriert ist, durch Instrumentalisierung eines parallelen Schaltzustandes bei modularen Multilevelkonvertern mit serieller und paralleler Konnektivität einen Beitrag des jeweiligen Submoduls zu einer Gesamtgleichspannungsausgabe zu erzeugen.

14. Modularer Multilevelkonverter nach Anspruch 8, wobei parallel zu den zweiten und dritten Halbbrücken eine vierte und eine fünfte Halbbrücke angeordnet werden, wobei ein jeweiliger Mittenabgriff (1028) an der vierten und fünften Halbbrücke mit entsprechenden Anschlüssen des ersten benachbarten Submoduls verbunden ist, wobei die jeweiligen Ausgangsanschlüsse (1029) der zweiten und dritten Halbbrücke mit entsprechenden Anschlüssen des zweiten benachbarten Submoduls verbunden sind, und wobei die Steuerung dazu konfiguriert ist, an den jeweiligen Ausgangsanschlüssen (1028, 1029) einen Wechselstrom zu erzeugen, wobei auf Grund der zusätzlichen vierten und fünften Halbbrücken die jeweiligen Zwischenkreiskondensatoren (111, 112, 113) benachbarter Submodule parallel verschaltbar sind.

15. System, welches eine Gleichstromquelle (711), eine Last (630, 730) mit mindestens einer Phase, und einen modularen Multilevelkonverter nach einem der Ansprüche 8 bis 14 umfasst, wobei der modulare Multilevelkonverter dazu konfiguriert ist, ein Verfahren nach einem der Ansprüche 1 bis 7 auszuführen.

Fig. 1

EP 4 270 764 A1

Fig. 2

Fig. 3

EP 4 270 764 A1

410

411 = 412 ∧ 413 ∧ 414 ∧ 415

420

421 = 422 ∧ 423 ∧ 424 ∧ 425

**Fig. 4**

500

501

< 0

502

510

Not

503

≥

520

Not

504

**Fig. 5**

Fig. 6

700

701

711

702

703

704    730

**Fig. 7**

800

701

702

711

703

...

809

730    **Fig. 8**

Fig. 9

EP 4 270 764 A1

Fig. 10

Europäisches Patentamt

European Patent Office

Office européen des brevets

**Nummer der Anmeldung**

EP 22 02 0627

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FARZAD IRAJI ET AL: "A Generalized Switched-Capacitor Modular Multilevel Inverter Topology for Multiphase Electrical Machines with Capacitor-Voltage Self-Balancing Capability", ARXIV.ORG, CORNELL UNIVERSITY LIBRARY, 201 OLIN LIBRARY CORNELL UNIVERSITY ITHACA, NY 14853, 14. April 2022 (2022-04-14), Seiten 1-14, XP091204093, DOI: 10.48550/ARXIV.2204.06867 * Abbildungen 2-5 * ----- | 1-15 | INV. H02M7/483 H02M1/00 |
| X | YOUHEI HINAGO ET AL: "A switched-capacitor inverter using series/parallel conversion", IEEE INTERNATIONAL SYMPOSIUM ON CIRCUITS AND SYSTEMS. ISCAS 2010 - 30 MAY-2 JUNE 2010 - PARIS, FRANCE, IEEE, US, 30. Mai 2010 (2010-05-30), Seiten 3188-3191, XP031725171, ISBN: 978-1-4244-5308-5 * Abbildung 1 * ----- | 1-15 | |
| X | HINAGO Y ET AL: "A single phase multilevel inverter using switched series/parallel DC voltage sources", ENERGY CONVERSION CONGRESS AND EXPOSITION, 2009. ECCE. IEEE, IEEE, PISCATAWAY, NJ, USA, 20. September 2009 (2009-09-20), Seiten 1962-1967, XP031887994, DOI: 10.1109/ECCE.2009.5316515 ISBN: 978-1-4244-2893-9 * Abbildung 1 * * Kapitel III * ----- -/-- | 1-15 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 6. September 2023 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Seite 1 von 2

EUROPÄISCHER RECHERCHENBERICHT

Nummer der Anmeldung

EP 22 02 0627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BHALEKAR MANDAR M ET AL: "Simulated Evaluation of Modern Multilevel Inverter Topologies", 2019 INNOVATIONS IN POWER AND ADVANCED COMPUTING TECHNOLOGIES (I-PACT), IEEE, Bd. 1, 22. März 2019 (2019-03-22), Seiten 1-5, XP033690634, DOI: 10.1109/I-PACT44901.2019.8959948 [gefunden am 2020-01-14] * Abbildung 2 * * Kapitel II B * ----- | 1-15 | |
| X | PANDRY NARENDRA RAO ET AL: "Cascaded diode clamped inverter based grid-connected photovoltaic energy conversion system with enhanced power handling capability and efficiency", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, Bd. 15, Nr. 3, 12. Januar 2021 (2021-01-12), Seiten 600-613, XP006111048, ISSN: 1752-1416, DOI: 10.1049/RPG2.12046 * Abbildungen 2b, 3 * ----- | 1-15 | RECHERCHIERTE SACHGEBIETE (IPC) |
| A | WO 2014/118008 A1 (SIEMENS AG [DE]) 7. August 2014 (2014-08-07) * Abbildung 1 * ----- | 3,10 | |
| A | WO 2017/016675 A1 (PORSCHE AG [DE]) 2. Februar 2017 (2017-02-02) * Abbildungen 2,6,8,9 * ----- | 6,7,13, 14 | |

Der vorliegende Recherchenbericht wurde für alle Patentansprüche erstellt

| Recherchenort | Abschlußdatum der Recherche | Prüfer |
|---|---|---|
| Den Haag | 6. September 2023 | Kail, Maximilian |

EP 4 270 764 A1

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2023

| Im Recherchenbericht angeführtes Patentdokument | Datum der Veröffentlichung | Mitglied(er) der Patentfamilie | Datum der Veröffentlichung |
|---|---|---|---|
| WO 2014118008 A1 | 07-08-2014 | CN 104955672 A | 30-09-2015 |
| | | DE 112014000631 A5 | 05-11-2015 |
| | | EP 2762347 A1 | 06-08-2014 |
| | | US 2015372611 A1 | 24-12-2015 |
| | | WO 2014118008 A1 | 07-08-2014 |
| WO 2017016675 A1 | 02-02-2017 | CN 107925366 A | 17-04-2018 |
| | | DE 102015112513 A1 | 02-02-2017 |
| | | JP 6612426 B2 | 27-11-2019 |
| | | JP 2018521624 A | 02-08-2018 |
| | | KR 20180037009 A | 10-04-2018 |
| | | US 2018212530 A1 | 26-07-2018 |
| | | WO 2017016675 A1 | 02-02-2017 |

EPO FORM P0461

Für nähere Einzelheiten zu diesem Anhang : siehe Amtsblatt des Europäischen Patentamts, Nr.12/82

**EP 4 270 764 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. VIJEH ; M. REZANEJAD ; E. SAMADAEI ; K. BERTILSSON.** A General Review of Multilevel Inverters Based on Main Submodules: Structural Point of View. *IEEE Transactions on Power Electronics,* Oktober 2019, vol. 34 (10), 9479-9502
- **C. GAO ; J. LV.** A New Parallel-Connected Diode-Clamped Modular Multilevel Converter With Voltage Self-Balancing. *IEEE Transactions on Power Delivery,* Juni 2017, vol. 32 (3), 1616-1625
- **N. TASHAKOR ; M. KILICTAS ; E. BAGHERI ; S. GOETZ.** Modular Multilevel Converter With Sensorless Diode-Clamped Balancing Through Level-Adjusted Phase-Shifted Modulation. *IEEE Transactions on Power Electronics,* Juli 2021, vol. 36 (7), 7725-7735
- **GOETZ, S.M. ; PETERCHEV, A.V. ; WEYH, T.** Modular Multilevel Converter With Series and Parallel Module Connectivity: Topology and Control. *Power Electronics, IEEE Transactions on,* 2015, vol. 30 (1), 203, , 215